# EUROPEAN PATENT APPLICATION

(11) **EP 4 779 774 A1**
(43) Date of publication of application: **22.07.2026**
(21) Application number: 24953261.5
(22) Date of filing: 06.12.2024
(51) Int. Cl.: H01M 50/244, H01M 50/258

(54) **BATTERY BOX AND BATTERY**

(30) Priority: 22.10.2024 CN 202422560669 U; 22.10.2024 CN 202411481489
(71) Applicant: Eve Energy Co., Ltd., Huizhou, Guangdong 516006 (CN)
(72) Inventor: FU, Weiyin, Huizhou, Guangdong 516006 (CN); ZHANG, Minglang, Huizhou, Guangdong 516006 (CN)
(74) Representative: Zhu, Puxing
(86) International application number: PCT/CN2024/137314
(87) International publication number: WO 2026/085979

(57) **Abstract**

The present application provides a battery case and a battery, the battery case includes a case having an inner bottom wall, a first inner side wall and a second inner side wall; a first bracket detachably disposed on the first inner side wall and parallel to the inner bottom wall; a second bracket detachably disposed on the second inner side wall and aligned with the first bracket. The first inner side wall and the second inner side wall are oppositely disposed and connected to the inner bottom wall.

## Description

This application claims priority to Chinese Patent Application No. 202411481489.9, filed with the Chinese Patent Office on October 22, 2024, and Chinese Patent Application No. 202422560669.8, filed with the Chinese Patent Office on October 22, 2024. The disclosures of the aforementioned applications are incorporated herein by reference.

### TECHNICAL FIELD

The present application relates to a technical field of batteries, and more particularly, to a battery case and a battery.

### BACKGROUND

In related arts, if a multi-layer battery pack stacked design is applied for assembling a battery, it is generally preferable to first mount a fixing frame on a vehicle frame, and then place separately-sealed standard battery packs on the fixing frame. A sufficient assembly space needs to be reserved for the battery pack upon mounting the fixing frame, to place the battery pack smoothly.

### SUMMARY

However, after the battery pack is installed, only a part of the reserved assembly space is used to place external cables, water-cooling tubes, and the like among the battery packs, and there is still more space that is not fully utilized, which causes a low space utilization rate to a battery system.

Some embodiments of the present application provide a battery case and a battery, for improving the space utilization rate of the battery system in related arts.

In a first aspect, some implementations of the present application provide a battery case including:
a case having an inner bottom wall, a first inner side wall and a second inner side wall, where the first inner side wall and the second inner side wall are oppositely disposed and connected to the inner bottom wall;
a first bracket detachably disposed on the first inner side wall and parallel to the inner bottom wall; and
a second bracket detachably disposed on the second inner side wall and aligned with the first bracket;
where the first bracket and the second bracket are both configured to support a battery module.

In a second aspect, some implementations of the present application provide a battery, including a battery case as described above, further including a battery module;
where two ends of the battery module are respectively connected with the first bracket and the second bracket.

### BENEFICIAL EFFECT

According to the present application, a first bracket and a second bracket are detachably connected to a first inner side wall and a second inner side wall of a case, as such, the first bracket and the second bracket, which are not connected to a battery module, are conveniently detached when the battery module is installed. Thus, an assembly space occupied by the first bracket and the second bracket is reduced, and spaces in the case of the battery case can be for installing as many battery modules as possible, which helps to arrange more batteries in a battery system and improves the situation where a space utilization rate of the battery system is low.

According to the battery provided in the present application, a battery module is disposed in a case, two ends of the battery module are respectively connected to the first bracket and the second bracket, and the first bracket and the second bracket are detachably disposed on the first inner side wall and the second inner side wall, respectively. On one hand, it is convenient to mount and fix the battery module and the like in the case, and on the other hand, it is facilitated for sufficiently using the space in the case to arrange battery module. Thus, as many battery modules as possible are installed in the battery case, thereby improving the space utilization rate of the battery case.

### BRIEF DESCRIPTION OF THE DRAWINGS

In order that the technical solution in the embodiments of the present application may be explained more clearly, a brief description will be given below to the drawings required in the description of the embodiments.
FIG. 1 is a partial cross-sectional view of a battery case according to some embodiments of the present application;
FIG. 2 is a partial cross-sectional view of a battery case in which a first sub-bracket is installed and a second bracket is not installed, according to some embodiments of the present application;
FIG. 3 is a partial cross-sectional view of a battery case provided with a first support seat, wherein a first bracket and a second bracket are not installed, according to some embodiments of the present application;
FIG. 4 is a partial cross-sectional view of a battery case provided with a sub-first support seat, wherein a first bracket and a second bracket are not installed, according to some embodiments of the present application;
FIG. 5 is another partial cross-sectional view of a battery case according to some embodiments of the present application, wherein a first bracket and a second bracket are not installed;
FIG. 6 is a partial cross-sectional view of a battery assembled with a battery module according to some embodiments of the present application;
FIG. 7 is a schematic structural diagram of a battery module according to some embodiments of the present application; and
FIG. 8 is a partial cross-sectional view of a battery internally assembled full of battery modules according to some embodiments of the present application.

### Reference Numerals:

1. case; 10. inner bottom wall; 2. first bracket; 21. first sub-bracket; 3. second bracket; 4. first support portion; 41. first support seat; 5. second support portion; 6. first bottom bracket; 7. second bottom bracket; 8. battery module; 81. first surface; 82. second surface; 83. heat dissipation plate; and 9. heat conductive adhesive.

### DETAILED DESCRIPTION OF THE EMBODIMENTS

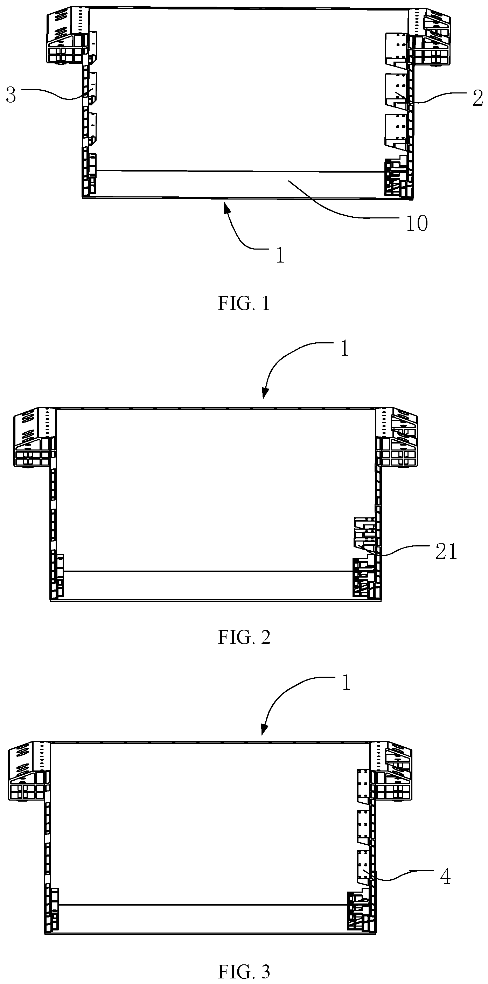

Referring to FIG. 1, FIG. 1 is a partial cross-sectional view of a battery case according to some embodiments of the present application. An embodiment of the present application provides a battery case including a case 1, a first bracket 2, a second bracket 3. The case 1 has an inner bottom wall 10, a first inner side wall, and a second inner side wall. The first inner side wall and the second inner side wall are connected to the inner bottom wall 10 and disposed opposite to each other. The first bracket 2 is detachably arranged on the first inner side wall and is parallel to the inner bottom wall 10. The second bracket 3 is detachably arranged on the second inner side wall and is aligned with the first bracket 2, and both the first bracket 2 and the second bracket 3 are configured to support a battery module 8.

It should be understood that the term "aligned with" herein means that a distance from the second bracket 2 to the inner bottom wall 10 is same as that from the second bracket 3 to the inner bottom wall 10. Alternatively, the term "aligned with" herein means that a distance from the second bracket 2 to the inner bottom wall 10 is same as that from the second bracket 3 to the inner bottom wall 10, and the first bracket 2 and the second bracket 3 are arranged in alignment with each other in a direction from one of the first inner side wall and the second inner side wall to the other.

In related arts, when installing a battery module, it is generally necessary to a first mount a fixing frame on a vehicle frame, and then fix the battery module 8 to the fixing frame. In order to facilitate the installation of the battery module 8, a large assembly space needs to be reserved for the battery modules8, but only a part of the reserved assembly space is used to place connecting members among the battery modules 8 after assembly, and a large amount of the reserved assembly space is still not used, which results in a low space utilization rate of a battery system. In the embodiments of the present application, the first bracket 2 and the second bracket 3 are configured for supporting and fixing the battery module 8. The first bracket 2 and the second bracket 3 are detachably arranged on the first inner side wall and the second inner side wall of the case 1, respectively, to facilitate mounting and fixing of the battery module 8 and the like in the case 1. On the other hand, when installing the battery module 8, the first bracket 2 and the second bracket 3 which are not connected to the battery module 8 can be removed to reduce an occupy on the assembly space. As such, it is not necessary to reserve much space for assembly for each battery module 8, thereby reducing the space not utilized after the battery module 8 is assembled, and helping to make full use of the space in the case 1 to arrange as many battery modules 8 as possible. Specifically, upon installing, only the first bracket 2 and the second bracket 3 for connecting to the battery module 8 to be installed are connected to the case 1. As such, the influence (for example, blocking a viewing field of an installer or preventing the installer from connecting the battery module 8 to the bracket using a tool) from the remaining first brackets 2 and the second brackets 3 on the installation of the battery module 8 to be installed in case where all the first brackets 2 and the second brackets 3 are preinstalled on the case 1 can be reduced. Thus, an operation space for installing the battery module 8 is increased, thereby contributing to fully utilizing the space in the case 1 to arrange as many battery modules 8 as possible in the battery case, and improving the space utilization rate of the battery case. In addition, the first bracket 2 and the second bracket 3 of the embodiment of the present application are detachably arranged on the first inner side wall and the second inner side wall of the case 1, thereby facilitating disassembly and maintenance of the battery.

In some embodiments, the first bracket 2 may be an integral strip structure extending in a width direction of the first inner side wall; alternatively, the first bracket 2 may be a structure having a plurality of blocks spaced along the width direction of the first inner side wall. The second bracket 3 may be an integral strip structure extending in a width direction of the second inner side wall; alternatively, the second bracket may be structure having a plurality of blocks spaced along the width direction of the second inner side wall.

It should be understood that the first bracket 2 and the second bracket 3 may be both in the integral strip structure or have the structure having a plurality of blocks spaced. Alternatively, one of the first bracket 2 and the second bracket 3 is the integral strip structure, and the other of the first bracket 2 and the second bracket 3 is the structure having a plurality of blocks spaced.

By way of example, reference is made to FIG. 2, which is a partial cross-sectional view of a battery case in which a first sub-bracket is installed and a second bracket is not installed, according to some embodiments of the present application. In some embodiments of the present application, the first bracket 2 includes a plurality of first sub-brackets 21 arranged at intervals in a direction parallel to the inner bottom wall 10; and/or, the second bracket 3 includes a plurality of second sub-brackets arranged at intervals in the direction parallel to the inner bottom wall 10; and the second sub-brackets are in one-to-one correspondence with the first sub-brackets 21.

In the embodiment of the present application, the first bracket 2 is defined as a structure including a plurality of first sub-brackets 21 arranged at intervals, which helps to make full use of the space between the plurality of first sub-brackets 21. Specifically, connecting members among the plurality of battery modules 8 in the battery case may be placed at spaces among the first sub-brackets 21, as such, spaces for placing the battery modules 8 in the battery case is increased, and as many battery modules 8 as possible can be installed by making full use of the spaces in the case 1, thereby increasing the space utilization rate of the battery case and improving the space utilization rate of the battery system. The benefits of the second bracket 3 having a plurality of second sub-brackets (not shown) are similar or identical to those of the first bracket 2, and are further described herein.

The first bracket 2 and the second bracket 3 are defined as structures including a plurality of sub-brackets, so that the spaces among the first sub-brackets 21 and the spaces among the second sub-brackets are utilized, thereby contributing to further improving the space utilization rate of the battery case. Further, the specific structures of the first bracket 2 and the second bracket 3 may be selected according to the actual use scenario. Specifically, only the first bracket 2 includes a plurality of spaced first sub-brackets 21, but the second bracket 3 has an integral strip structure. Alternatively, only the second bracket 3 includes a plurality of spaced second sub-brackets, but the first bracket 2 has an integral strip structure. Further, since the installation of the battery module 8 and the arrangement of the connecting members are not affected by the first bracket 2 and the second bracket 3 adjacent to the inner bottom wall 10, the first bracket 2 and the second bracket 3 adjacent to the inner bottom wall 10 can be defined as the integral strip structures. If the strength of the first bracket 2 and the second bracket 3 is considered, the first bracket 2 and the second bracket 3 in the battery case may be selectively defined as the integral bar structures.

In some embodiments of the present application, a plurality of first brackets 2 and a plurality of second brackets 3 are provided in a direction perpendicular to the inner bottom wall 10, and the number of the first brackets 2 is same as the number of the second brackets 3. Each of the first brackets 2 is arranged in alignment with a corresponding one of the second brackets 3.

In the embodiment of the present application, the plurality of first brackets 2 and the plurality of second brackets 3 are provided in the battery case, to mount a plurality of battery modules 8 in the battery case, thereby helping to fully utilize the spaces in the battery case to mount as many battery modules 8 as possible, and improving the low space utilization rate of the battery system.

In some embodiments of the present application, the first sub-brackets 21 are arranged in alignment in the direction perpendicular to the inner bottom wall 10; and/or, the second sub-brackets are arranged in alignment in the direction perpendicular to the inner bottom wall 10.

In some embodiments of the present application, the first bracket 2 is defined as a structure including a plurality of first sub-brackets 21. When the plurality of first brackets 2 are provided in the case 1, the plurality of first sub-brackets 21 included in each of the first brackets 2 are arranged in a plurality of ways. In the present embodiment, by arranging the plurality of first sub-brackets 21 included in the plurality of first brackets 2 in alignment in the direction perpendicular to the inner bottom wall 10, the spaces among the plurality of first sub-brackets 21 are much communicated for full use of, for example, by arranging the connecting members among the battery modules 8 in the spaces. Therefore, the arrangement of the first sub-bracket 21 and/or the second sub-bracket in the direction perpendicular to the inner bottom wall 10 provided by the embodiment of the present application helps to make full use of the spaces in the battery case, so that as many battery modules 8 as possible are installed in the battery case, thereby improving the space utilization rate of the battery system. Furthermore, the alignment of the plurality of first sub-brackets 21 included in the plurality of first brackets 2 in the direction perpendicular to the inner bottom wall 10 reduces the bending and stretching of the connecting members among the battery modules 8, and helps to improve the easy release of the connecting members. The second sub-brackets included in the second brackets 3 have advantageous effect similar to or the same as that of the first sub-brackets 21, and details are not described herein.

Referring to FIG. 3, FIG. 3 is a partial cross-sectional view of a battery case provided with a first support seat, wherein a first bracket and a second bracket are not installed, according to some embodiments of the present application. In some embodiments of the present application, the battery case further includes a first support portion 4 provided on the first inner side wall and connected to the first bracket 2; and/or, the second support portion 5 is provided on the second inner side wall and is connected to the second bracket 3.

The first bracket 2 and the second bracket 3 are detachably provided on the first inner side wall and the second inner side wall, respectively, to facilitate mounting of the battery modules 8 in the battery case. However, when the battery modules 8 require a high connection strength between the first bracket 2 and the first inner side wall, for example, when the battery modules 8 have heavy weights. In this case, the detachable connection of the first bracket 2 and/or the second bracket 3 to the case 1 of the battery case may fail to meet the strength requirements. Therefore, in some embodiments of the present application, a first support portion 4 is provided on the first inner side wall of the battery case, and/or a second support portion 5 is provided on the second inner side wall of the battery case, so that the first support portion 4 is connected to the first bracket 2, the second support portion 5 is connected to the second bracket 3, and the first support portion 4 and/or the second support portion 5 are provided integrally with the case 1 to help to improve the connection strength between the first bracket 2 and the case 1 and the connection strength between the second bracket 3 and the case 1.

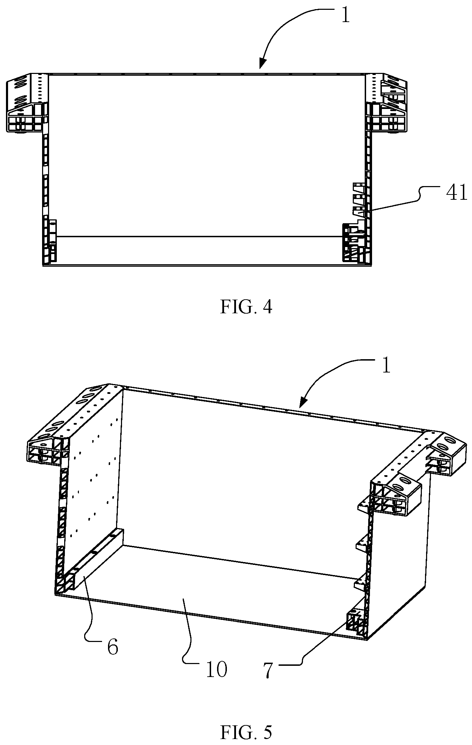

Referring to FIG. 4, FIG. 4 is a partial cross-sectional view of a battery case provided with a sub-first support seat, wherein a first bracket and a second bracket are not installed, according to some embodiments of the present application. In some embodiments of the present application, the first support portion 4 includes a plurality of first support seats 41 arranged at intervals in a direction parallel to the inner bottom wall 10, the number of the first support seats 41 is as same as the number of the first sub-brackets 21; and/or, the second support portion 5 includes a plurality of second support seats arranged at intervals in a direction parallel to the inner bottom wall 10, the number of the second support seats is as same as the number of the second sub-brackets.

In the embodiment of the present application, by providing the first support portion 4 with a structure including a plurality of first support seats 41 spaced, the spaces inside case 1 occupied by the first support portion 4 are reduced, so that the spaces for providing the battery modules 8 and the connecting members are increased, and as many battery modules 8 as possible can be installed in the battery case, thereby improving the space utilization rate of the battery case. Illustratively, the number of the first support seats 41 is as same as the number of the first sub-brackets 21, so that the case in which the first sub-brackets 21 are not connected to the case 1 can be avoided, thereby helping to ensure the connection strength between the battery modules 8 and the case 1. At the same time, the case in which the spare first support seats 41 (that is, the first support seats 41 which are not connected to the first sub-brackets 21) affect the assembly of the battery modules 8 and the connecting members can be avoided, and the case in which the spare first support seats 41 occupy the spaces inside the case 1 can be avoided, so that the space utilization rate of the battery case can be improved. The benefits of the second support portion 5 including the plurality of second support seats (not shown) are similar or identical to the first support portion 4, and details are not described herein.

Each of the first support portion 4 and the second support portion 5 is defined to include a plurality of support seats, thereby contributing to further improving the space utilization rate of the battery case.

In some embodiments, in a direction perpendicular to the inner bottom wall 10, the first support portion 4 and/or the second support portion 5 have right trapezoids in cross-sections.

Referring to FIG. 3 and FIG. 4, each of the first support portion 4 and the first support seat 41 is a right trapezoid in cross-section, in which a lower bottom of the right trapezoid is in contact with the first inner side wall, an upper bottom of the right trapezoid faces away from the first inner side wall, and a waist of the right trapezoid has an included angle of 90 degrees with the upper bottom and the lower bottom and faces away from the inner bottom wall 10. According to the embodiment of the present application, the cross-sections of the first support portion 4 and the first support seat 41 in the direction perpendicular to the inner bottom wall 10 have right trapezoids, which helps to increase the connection strength between the first support portion 4 and the case 1. The specific shape of the second support portion 5 and the second support seat and the benefits thereof are similar to or the same as those of the first support portion 4 and the second support seat, and details are not described herein.

Referring to FIG. 5, which is another partial cross-sectional view of a battery case according to some embodiments of the present application, wherein a first bracket and a second bracket are not installed. In some embodiments of the present application, the battery case further includes a first bottom bracket 6 disposed at a junction of the inner bottom wall 10 and the first inner side wall; and a second bottom bracket 7 disposed at a junction of the inner bottom wall 10 and the second inner side wall; and the second bottom bracket 7 is provided in alignment with the first bottom bracket 6.

In the present embodiment, since the first bottom bracket 6 and the second bottom bracket 7 are located at a lowest position inside the case 1, the installation of the battery modules 8 is not affected by the first bottom bracket 6 and the second bottom bracket 7. Moreover, the first bottom bracket 6 and the second bottom bracket 7 are provided integrally with the case 1, so that there is no loosening between the first bottom bracket 6 and the case 1, and between the second bottom bracket 7 and the case 1, thereby helping to increase the connection strength between the case 1 and the battery modules 8.

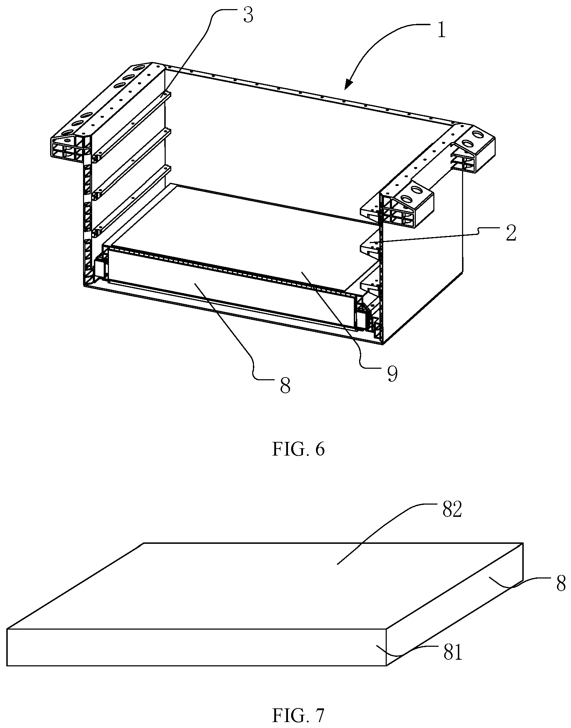

On the other hand, referring to FIG. 6, FIG. 6 is a partial cross-sectional view of a battery assembled with a battery module according to some embodiments of the present application. An embodiment of the present application provides a battery including the battery case as described above, and the battery module 8. Both ends of the battery module 8 are connected with the first bracket 2 and the second bracket 3, respectively.

In the present embodiment, the battery module 8 is provided in the case 1, and both ends of the battery module 8 are connected to the first bracket 2 and the second bracket 3, respectively. The first bracket 2 and the second bracket 3 are detachably provided on the first inner side wall and the second inner side wall, respectively, to facilitate mounting and fixing of the battery module 8 and the like in the case 1, on the one hand, and, on the other hand, to facilitate fully utilizing the spaces in the case 1 for arranging the battery module 8. Specifically, when each battery module 8 is installed, only the first bracket 2 and the second bracket 3 for connecting to the battery module 8 to be installed are connected to the case 1. As such, the influence of the remaining first brackets 2 and the second brackets 3 on the installation of the battery module 8 to be installed in the case where all the first brackets 2 and the second brackets 3 are preinstalled on the case 1 can be reduced. Thus, operation spaces for installing the battery module 8 are increased, thereby contributing to fully utilizing the spaces in the case 1 to arrange the battery modules 8, installing as many battery modules 8 as possible in the battery case, and improving the space utilization rate of the battery case.

Referring to FIG. 7, FIG. 7 is a schematic structural diagram of a battery module according to some embodiments of the present application. In some embodiments of the present application, the battery module 8 has a first surface 81, a second surface 82, a third surface, and a fourth surface sequentially connected. The first surface 81, the second surface 82, the third surface, and the fourth surface each have an extension surface that intersects with the first inner side wall and the second inner side wall. The battery further includes a heat dissipation plate 83 disposed on at least one of the first surface 81, the second surface 82, the third surface, and the fourth surface.

In the present embodiment, the heat dissipating plate 83 is provided on the first surface 81, the second surface 82, the third surface (not shown), and the fourth surface (not shown) of the battery module 8, so that the heat dissipating plate 83 helps to dissipate heat from the battery module 8 and reduce the temperature of the battery module 8. The heat dissipating plate 83 is provided between the battery modules 8, to improve the situation where the heat accumulation easily occurs between the battery modules 8, thereby improving the charging/discharging performance and the service life of the battery.

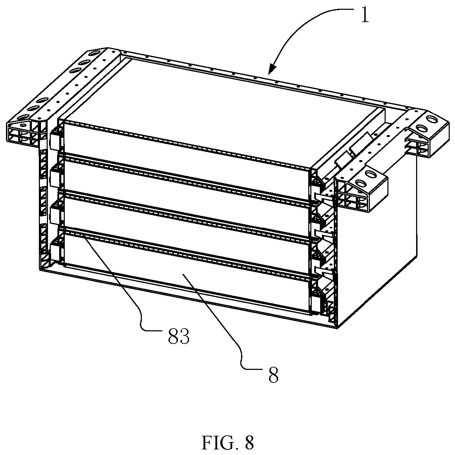

Referring to FIG. 6 and FIG. 8, FIG. 8 is a partial cross-sectional view of a battery internally assembled full of battery modules according to some embodiments of the present application. In some embodiments of the present application, the battery includes a plurality of battery modules 8, the number of battery modules 8 corresponds to the number of the first brackets 2 and the number of the second brackets 3, and both ends of each battery module 8 are respectively connected to one first bracket 2 and one second bracket 3. The battery further includes a heat conductive adhesive 9, the heat conductive adhesive 9 is disposed between adjacent battery modules 8 and respectively in contact with the adjacent battery modules 8.

The battery provided in some embodiments of the present application includes the plurality of battery modules 8, and the heat conductive adhesive 9 is provided between the plurality of battery modules 8 to facilitate uniform heat accumulation between the battery modules 8 and to improve the situation where the heat accumulation easily occurs between the battery modules 8. At the same time, the heat conductive adhesives bond the plurality of battery modules 8 into one unitary body, and help to improve the overall rigidity of the battery. The plurality of battery modules 8 in the battery case are bonded by the heat conductive adhesives, so that the spaces among the battery modules 8 are fully utilized in a depth direction of the battery case, thereby further improving the space utilization rate of the battery case.

In some embodiments of the present application, the battery further includes connecting members connected to the plurality of battery modules 8 and disposed among the first sub-brackets 21 and/or the second sub-brackets of the battery case.

In the present embodiment, the connecting members among the battery modules 8 are arranged among the first sub-brackets 21 and/or the second sub-brackets, which helps to make full use of the spaces among the first sub-brackets 21 and/or the second sub-brackets, thereby improving the space utilization rate of the battery case.

Illustratively, in an embodiment of the present application, the plurality of first brackets 2 and the plurality of second brackets 3 are provided in the direction perpendicular to the inner bottom wall 10. The first support portions 4 are provided on the first inner side wall, and each of the first support portions 4 includes the plurality of first support seats 41 spaced. Each of the first brackets 2 includes the plurality of first sub-brackets 21 spaced, and each of the plurality of first sub-brackets 21 is connected to each of the plurality of first support seats 41 in a one-to-one correspondence. The plurality of second brackets 3 are detachably connected to the second inner side wall, and each of the plurality of second bracket 3 includes the plurality of second sub-brackets spaced. Both ends of the battery module 8 are connected to the first bracket 2 and the second bracket 3, respectively. The connecting members among the battery modules 8 are arranged in the spaces among the first sub-brackets 21. The second sub-brackets are parallel to the direction of the inner bottom wall 10. The second sub-bracket has a size less than the first sub-bracket 21. The first sub-brackets 21 are connected to the first support seats 41. As such, a distance between the battery module 8 and the second inner side wall is small, a distance between the battery module 8 and the first inner side wall is large, and the connecting members among the battery modules 8 are arranged between the first sub-brackets 21, which helps to make full use of the spaces among the first sub-brackets 21 and improves the space utilization rate of the battery case.

## Claims

1. A battery case, comprising:
a case having an inner bottom wall, a first inner side wall and a second inner side wall, wherein the first inner side wall and the second inner side wall are oppositely disposed and connected to the inner bottom wall;
a first bracket detachably disposed on the first inner side wall and parallel to the inner bottom wall; and
a second bracket detachably disposed on the second inner side wall and aligned with the first bracket;
wherein the first bracket and the second bracket are both configured to support a battery module.

2. The battery case according to claim 1, wherein the first bracket comprises a plurality of first sub-brackets arranged at intervals in a direction parallel to the inner bottom wall.

3. The battery case according to claim 1, wherein the second bracket includes a plurality of second sub-brackets arranged at intervals in a direction parallel to the inner bottom wall, and the plurality of second sub-brackets are in one-to-one correspondence with a plurality of first sub-brackets.

4. The battery case according to claim 1, wherein the first bracket and the second bracket are both in an integral strip structure.

5. The battery case according to claim 1, wherein the first bracket is an integral strip structure, and the second bracket includes a plurality of second sub-brackets arranged at intervals in the direction parallel to the inner bottom wall; or the first bracket comprises a plurality of first sub-brackets arranged at intervals in the direction parallel to the inner bottom wall, and the second bracket is an integral strip structure.

6. The battery case according to claim 3, wherein a plurality of the first brackets and a plurality of the second brackets are provided in a direction perpendicular to the inner bottom wall, and a number of the plurality of first brackets is same as a number of plurality of the second brackets.

7. The battery case according to claim 6, wherein the plurality of first sub-brackets are aligned in the direction perpendicular to the inner bottom wall; and/or the plurality of second sub-brackets are aligned in the direction perpendicular to the inner bottom wall.

8. The battery case according to any one of claims 2 to 7, further comprising:
a first support portion disposed on the first inner side wall and connected to the first bracket; and/or a second support portion disposed on the second inner side wall and connected to the second bracket.

9. The battery case according to claim 8, wherein the first support portion and/or the second support portion are provided integrally with the case.

10. The battery case according to claim 8, wherein the first support portion comprises a plurality of first support seats spaced along the direction parallel to the inner bottom wall, and a number of the plurality of first support seats is same as a number of the plurality of first sub-brackets.

11. The battery case according to claim 10, wherein the plurality of first sub-brackets are connected in one-to-one correspondence with the plurality of first support seats.

12. The battery case according to claim 10, wherein the second support portion comprises a plurality of second support seats spaced along the direction parallel to the inner bottom wall, and a number of the plurality of second support seats is same as a number of the plurality of second sub-brackets.

13. The battery case according to claim 12, wherein a size of each of the plurality of second sub-bracket is smaller than a size of each of the plurality of first sub-bracket in the direction parallel to the inner bottom wall.

14. The battery case according to any one of claims 8 to 11, wherein the first support portion and/or the second support portion have right trapezoids in cross-sections in a direction perpendicular to the inner bottom wall.

15. The battery case according to claim 14, wherein a lower bottom of the right trapezoid is connected to the first inner side wall, an upper bottom of the right trapezoid faces away from the first inner side wall, and a waist of the right trapezoid has an included angle of 90 degrees with the upper bottom and the lower bottom and faces away from the inner bottom wall.

16. The battery case according to any one of claims 1 to 15, further comprising:
a first bottom bracket disposed at a junction of the inner bottom wall and the first inner side wall; and
a second bottom bracket disposed at a junction of the inner bottom wall and the second inner side wall; wherein the second bottom bracket is provided in alignment with the first bottom bracket.

17. A battery, comprising the battery case according to any one of claims 1 to 16, further comprising the battery module;
wherein two ends of the battery module are respectively connected with the first bracket and the second bracket.

18. The battery according to claim 17, wherein the battery module has a first surface, a second surface, a third surface, and a fourth surface sequentially connected; and the first surface, the second surface, the third surface, and the fourth surface each have an extension surface intersecting with the first inner side wall and the second inner side wall;
wherein the battery further comprises a heat dissipation plate disposed on at least one of the first surface, the second surface, the third surface, and the fourth surface.

19. The battery according to claim 17 or 18, wherein the battery comprises a plurality of the battery modules, a number of the plurality of battery modules corresponds to a number of a plurality of first brackets and a number of a plurality of second brackets, both ends of each of the plurality of battery modules are respectively connected to one of the plurality of first brackets and one of the plurality of second brackets, and the battery further comprises a heat conductive adhesive disposed between adjacent battery modules of the plurality of battery modules and respectively in contact with the adjacent battery modules.

20. The battery of claim 19, further comprising:
connecting members connected to the plurality of battery modules and disposed among the plurality of first sub-brackets and/or the plurality of second sub-brackets of the battery case.
